Europäisches Patentamt

European Patent Office

Office européen des brevets

(19)

(11) **EP 0 767 593 B1**

(12) **FASCICULE DE BREVET EUROPEEN**

(45) Date de publication et mention
de la délivrance du brevet:
**22.09.2004 Bulletin 2004/39**

(51) Int Cl.$^7$: **H04Q 7/36**

(21) Numéro de dépôt: **96402028.3**

(22) Date de dépôt: **25.09.1996**

(54) **Modelisation des interférences dans un réseau radiotéléphonique cellulaire**

Interferenzmodellierung in einem zellularen Funkübertragungsnetzwerk

Interference modelisation in a cellular radio telecommunication network

(84) Etats contractants désignés:
**DE GB**

(30) Priorité: **03.10.1995 FR 9511695**

(43) Date de publication de la demande:
**09.04.1997 Bulletin 1997/15**

(73) Titulaire: **FRANCE TELECOM**
**75015 Paris (FR)**

(72) Inventeur: **Marzoug, Mongi**
**92220 Bagneux (FR)**

(74) Mandataire: **Cabinet Martinet & Lapoux**
**BP 405**
**78055 Saint Quentin en Yvelines Cédex (FR)**

(56) Documents cités:
**WO-A-95/26598**

• **IEEE TRANSACTIONS ON COMMUNICATIONS, vol. COM-32, no. 4, Avril 1984, NEW YORK, US, pages 380-388, XP002007459 YEH Y S ET AL: "Outage probability in mobile telephony due to multiple log-normal interferers"**
• **IEEE TRANSACTIONS ON VEHICULAR TECHNOLOGY, vol. 40, no. 4, 1 Novembre 1991, NEW YORK, US, pages 777-785, XP000278287 BERNHARDT R C: "CALL PERFORMANCE IN A FREQUENCY REUSE DIGITAL PORTABLE RADIO SYSTEM"**
• **PROCEEDINGS OF THE MILITARY COMMUNICATIONS CONFERENCE (MILCOM), vol. 3 OF 3, 2 Octobre 1994, LONG BRANCH, US, pages 906-910, XP000505993 PADGETT J E: "CAPACITY ANALYSIS FOR UNLICENSED WIRELESS COMMUNICATIONS"**

## Description

La présente invention concerne des réseaux radiotéléphoniques cellulaires, et plus particulièrement l'affectation des fréquences dans une bande de fréquence allouée à un réseau radiotéléphonique cellulaire aux cellules du réseau radiotéléphonique.

Une bande de fréquence donnée est classiquement allouée à un réseau radiotéléphonique cellulaire. En raison du nombre limité de fréquences disponibles, une même fréquence doit être affectée à plusieurs cellules du réseau, c'est-à-dire utilisée simultanément par les stations de base respectives des cellules pour émettre des signaux radiotéléphoniques, ce qui provoque des interférences entre des signaux émis à une même fréquence ou à des fréquences voisines par des stations de base différentes. L'allocation de fréquences est un problème combinatoire complexe qui doit vérifier des critères contradictoires, notamment écouler tout le trafic téléphonique tout en limitant les interférences.

A titre d'exemple, on pourra se reporter aux deux documents suivants pour le calcul d'interférences dans une cellule d'un réseau cellulaire radiotéléphonique en considérant une distribution de Rayleigh due à une réception en diversité d'espace et une distribution log-normale due à l'effet de masqué : : IEEE TRANSACTIONS ON COMMUNICATIONS, vol. COM-32, no. 4, avril 1984, NEW YORK, US, pages 380-388, YEH Y S ET AL, "Outage Probability in Mobile Telephony Due to Multiple Log-Normal Interferers" ; et IEEE TRANSACTIONS ON VEHICULAR TECHNOLOGY, vol. 40, no. 4, 1er novembre 1991, NEW YORK, US, pages 777-785, BERNHARDT RC, "Call Performance in a Frequency Reuse Digital Portable Radio System".

Un procédé connu modélise les interférences au moyen d'une matrice de compatibilité qui indique pour les cellules du réseau considérées deux à deux l'écart fréquentiel minimal qui doit exister entre les fréquences affectées aux deux cellules pour que l'interférence entre les deux cellules demeure inférieure à un seuil.

Ce procédé ne prend en compte que les interférences dues aux cellules considérées deux à deux, alors qu'en réalité les interférences dues à toutes les cellules se cumulent.

En outre, la matrice de compatibilité ne fournit qu'une information binaire, à savoir la compatibilité ou l'incompatibilité de fréquences affectées à deux cellules données du réseau, et ne renseigne pas sur le niveau exact d'interférence. La modélisation des interférences par matrice de compatibilité est utilisable dans un problème d'allocation de fréquence ayant comme critère de minimiser le nombre de fréquences utilisées dans le réseau radiotéléphidnique cellulaire, ce qui est un cas peu exploité en pratique.

La présente invention vise à rémédier aux inconvénients précités en fournissant un procédé de modélisation des interférences qui tient compte des interférences multiples tout en formulant simplement l'affectation de fréquence qui peut alors être résolue suivant un critère sélectionné par exemple parmi maximiser le trafic radiotéléphonique, minimiser les interférences, maximiser l'efficacité spectrale ou minimiser le nombre de fréquences utilisées. Le procédé selon l'invention ne vise pas à calculer des interférences, mais à considérer celles-ci pour affecter des fréquences dans le réseau cellulaire de manière optimale.

A cette fin, un procédé de modélisation des interférences dans un réseau radiotéléphonique cellulaire comprenant des cellules desservies par des stations de base respectives, procédé selon lequel un spectre de fréquences comprenant un nombre fini de fréquences est alloué au réseau, et un modèle de propagation indique des signaux radioélectriques respectivement émis à chaque fréquence du spectre depuis les stations de base du réseau et reçus en un point du réseau, est caractérisé en ce qu'il comprend les étapes énoncées dans la revendication 1.

La sommation des interférences au point sélectionné dépend ainsi des coefficients d'un plan d'allocation de fréquence qui sont choisis de manière à optimiser l'utilisation des fréquences aux stations de base en fonction d'un critère sélectionné, comme on le verra dans la suite.

De préférence, le procédé comprend en outre diviser le premier modèle d'interférence par le signal émis à la première fréquence sélectionnée depuis la station de base desservant le point sélectionné du réseau.

Cette première réalisation considère les interférences co-canal.

Contrairement à la technique antérieure, l'invention propose ainsi de calculer le rapport (interférences/signal utile), et non l'inverse, afin de

- trouver une formulation linéaire des interférences, simples et multiples, sur chaque canal radio en fonction des coefficients de contrôle d'un plan d'affectation de fréquences ;
- en effectuant la moyenne des rapports interférences sur signal utile dans une cellule radio, faire intervenir essentiellement les zones où les rapports interférences sur signal utile sont élevés ce qui est important pour obtenir un bon plan d'affectation de fréquences.

Selon une seconde réalisation, le procédé peut comprendre en outre les étapes dans la revendication 3.

Cette seconde réalisation inclut les interférences co-canal et en canal adjacents.

Selon une troisième réalisation, le procédé peut comprendre en outre les étapes dans la revendication 4.

Cette troisième réalisation permet de réduire le nombre de contraintes d'interférence, typiquement de quelques centaines de points par cellule à quelques points par cellule. En outre, certains modèles de propagation ne donnent pas les signaux radioélectriques reçus en des points du réseau, mais seulement des moyennes qui sont alors utilisables dans cette réalisation.

L'étape de moyenner peut comprendre le calcul d'une moyenne arithmétique ou quadratique ou de coefficient réel positif desdits premiers modèles d'interférence sur lesdits plusieurs points sélectionnés. Ces moyennes sont effectuées par cellules, ou par parties de cellules.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est une portion d'un réseau radiotéléphonique cellulaire connu ;
- la figure 2 est un algorithme de modélisation des interférences dans un réseau radiotéléphonique cellulaire, selon une première réalisation de l'invention ;
- la figure 3 est une portion d'un réseau radiotéléphonique cellulaire connu ;
- la figure 4 est un algorithme de modélisation des interférences dans un réseau radiotéléphonique cellulaire, selon une seconde réalisation de l'invention ;
- la figure 5 est une algorithme de modélisation des interférences dans un réseau radiotéléphonique cellulaire, selon une troisième réalisation de l'invention ; et
- la figure 6 est un diagramme fonctionnel pour estimer un trafic dans le réseau radiotéléphonique cellulaire.

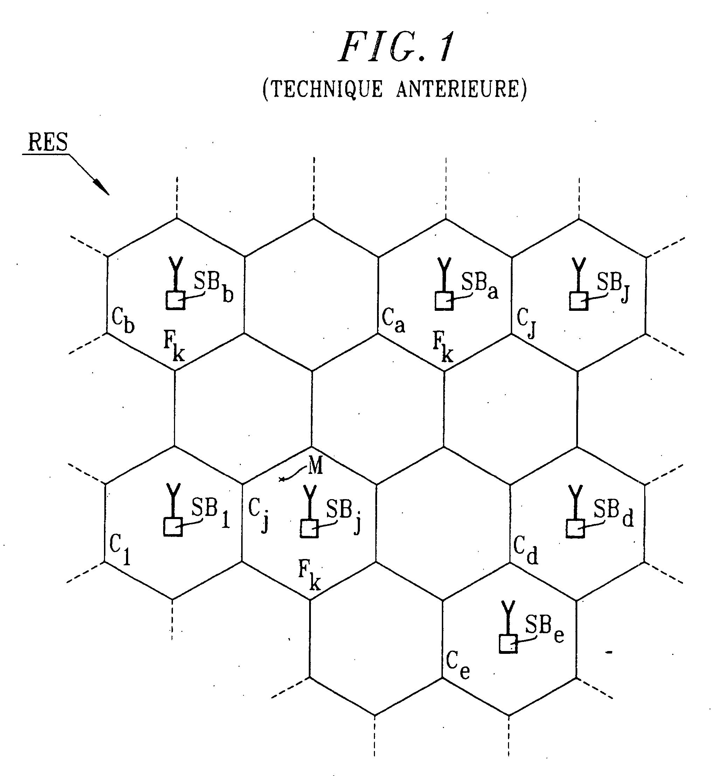

En référence à la figure 1, un réseau radiotéléphonique cellulaire RES comprend un ensemble de cellules $\{C_j , 1 \le j \le J\}$ , où J est un entier positif. Le réseau RES est par exemple le réseau numérique cellulaire paneuropéen GSM ("Global System for Mobile communications").

Les cellules $C_1$ à $C_J$ sont associées à des stations de base respectives $SB_1$ à $SB_J$. Une cellule $C_j$, pour j compris entre 1 et J, comprend une station de base $SB_j$ par l'intermédiaire de laquelle une station mobile établit et reçoit des communications radiotéléphoniques. Dans la suite, on s'intéresse plus particulièrement aux signaux radiotéléphoniques émis par les stations de base $SB_1$ à $SB_J$.

A titre d'exemple, la figure 1 montre des cellules $C_a$, $C_b$, $C_d$, $C_e$ et $C_j$ associées respectivement à des stations de base $SB_a$, $SB_b$, $SB_d$, $SB_e$ et $SB_j$ avec a, b, d, e et j des entiers compris entre 1 et J.

Un spectre de fréquence $\{F_k , 1 \le k \le K\}$ est alloué au réseau radiotéléphonique cellulaire RES, avec K un entier positif. Le spectre de fréquence est une suite de valeurs discrètes réparties uniformément dans une bande de fréquence donnée. Préalablement à la mise en service du réseau radiotéléphonique cellulaire RES, ou lors d'une réorganisation périodique de celui-ci, il est nécessaire d'affecter une ou plusieurs fréquences sélectionnées dans le spectre à chacune des stations de base du réseau. En pratique, pour le réseau GSM entre une et sept fréquences sont allouées à chaque cellule. Lorsque la fréquence $F_k$ avec k un entier compris entre 1 et K est allouée à la cellule $C_j$, le couple $(C_j, F_k)$ forme un canal radiotéléphonique.

L'allocation de fréquences aux cellules doit répondre à deux critères contradictoires. Il faut allouer suffisamment de fréquences pour écouler le trafic, mais il faut limiter les interférences entre les signaux émis.

En un point quelconque M du réseau, par exemple situé dans la cellule $C_j$, un récepteur d'une station mobile reçoit une somme de signaux émis par les J stations de base $SB_1$ à $SB_J$ du réseau.

Un modèle de propagation prédéterminé fournit des signaux $P_{1,k}$ à $P_{J,k}$ reçus au point M et émis à la fréquence $F_k$ depuis les stations de base $SB_1$ à $SB_J$ du réseau. Tous les signaux sont exprimés en terme de puissance.

Les signaux de propagation sont obtenus par calcul ou par mesure.

La somme des signaux émis à la fréquence $F_k$ et reçus au point M à la même fréquence $F_k$ s'exprime sous la forme :

$$\sum_{i = 1}^{J} x_{i, k} \cdot P_{i, k}$$

où $x_{i,k}$ vaut 1 si la fréquence $F_k$ est allouée à la station de base $SB_i$ et $x_{i,k}$ vaut 0 si la fréquence $F_k$ n'est pas allouée à la station de base $SB_i$. L'ensemble des coefficients $x_{i,k}$ pour $1 \le i \le J$ et $1 \le k \le K$ définit un plan d'allocation des fréquences pour le réseau. Le plan d'allocation des fréquences pour le réseau est la solution au problème d'allocation des fréquences et indique la ou les fréquence(s) allouée(s) à chacune des stations de base du réseau.

D'autre part, la somme des signaux à la fréquence $F_k$ reçus au point M peut s'exprimer de la manière suivante :

$$SU_{j,k} + I_k$$

où $SU_{j,k}$ est un signal utile émis à la fréquence $F_k$ par la station de base $SB_j$ et reçu au point M de la cellule $C_j$, avec $SU_{j,k} = P_{j,k}$ et

$I_k$ est une somme de signaux d'interférence émis à la fréquence $F_k$ par les autres stations de base du réseau, et reçus au point M de la cellule $C_j$.

La somme des signaux à la fréquence $F_k$ reçus au point M devient :

$$SU_{j,k} + I_k = \sum_{i=1}^{J} x_{i,k} \cdot P_{i,k} \qquad (1)$$

Si la fréquence $F_k$ est allouée à la cellule $c_j$, le signal utile $SU_{j,k}$ n'est pas nul.

La relation (1) s'écrit alors :

$$1 + \frac{I_k}{SU_{j,k}} = \sum_{i=1}^{J} x_{i,k} \cdot \frac{P_{i,k}}{SU_{j,k}}$$

Ainsi, au point M, le rapport de la somme des interférences dues aux signaux émis à la fréquence $F_k$ et du signal utile de fréquence $F_k$ s'exprime sous la forme d'une fonction linéaire des variables $x_{i,k}$, avec $1 \leq i \leq J$.

Par exemple si la fréquence $F_k$ est allouée aux cellules $C_a$, $C_b$ et $C_j$ comme montré à la figure 1, l'égalité suivante sera vérifiée au point M :

$$1 + \frac{I_k}{SU_{j,k}} = \frac{1}{SU_{j,k}} \cdot \left( P_{a,k} + P_{b,k} + P_{j,k} \right)$$

Les termes $P_{a,k}$, $P_{b,k}$ et $P_{j,k} = SU_{j,k}$ sont fournis par le modèle de propagation au point M.

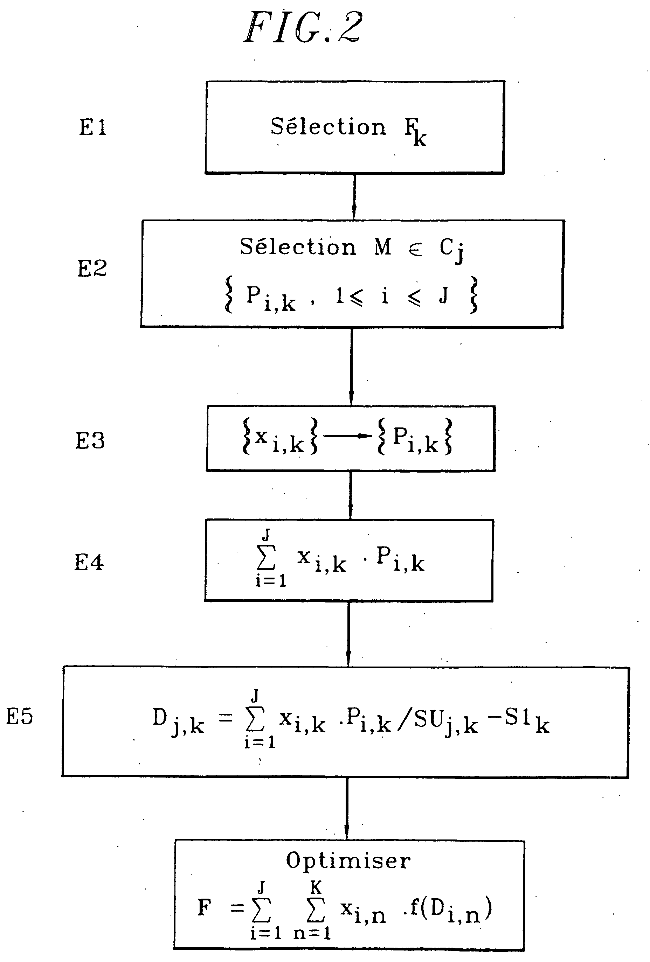

En référence à la figure 2 et selon une **première réalisation** de l'invention, un algorithme de modélisation des interférences dues aux signaux émis à la fréquence $F_k$ par les stations de base $SB_1$ à $SB_J$ du réseau RES et reçus au point M comprend cinq étapes E1 à E5.

L'étape E1 est la sélection de la fréquence $F_k$ parmi les fréquences $F_1$ à $F_K$.

A l'étape E2, le point M situé dans la cellule $C_j$ est sélectionné. Le modèle de propagation est connu au point M et fournit les signaux $P_{1,k}$ à $P_{J,k}$.

L'étape E3 affecte les caefficients $x_{1,k}$ à $x_{J,k}$ aux signaux $P_{1,k}$ à $P_{J,k}$. En d'autres termes, la fréquence $F_k$ est allouée à des cellules prédéterminées du réseau RES.

A l'étape E4, les signaux $P_{1,k}$ à $P_{J,k}$ sont multipliés par les coefficients $x_{1,k}$ à $x_{J,k}$ respectifs et la somme des produits ainsi obtenus est calculée.

A l'étape E5, la somme obtenue à l'étape E4 est mise sous la forme précédemment indiquée :

$$1 + \frac{I_k}{SU_{j,k}} = \sum_{i=1}^{J} x_{i,k} \cdot \frac{P_{i,k}}{SU_{j,k}}$$

pour y soustraire un seuil prédéterminé $S1_k$. Si la somme $1 + \frac{I_k}{SU_{j,k}}$ est inférieure ou égale au seuil $S1_k$, les coefficients $x_{1,k}$ à $x_{J,k}$ affectés à l'étape E3 correspondent à des interférences qui sont compatibles avec un bon fonctionnement du réseau.

Si la somme $1 + \dfrac{I_k}{SU_{j,k}}$ est strictement supérieure au seuil prédéterminé S1$_k$, cela signifie que les coefficients $x_{1,k}$ à $x_{J,k}$ affectés à l'étape E3 sont mal choisis.

A l'étape E5, la division par le signal SU$_{j,k}$ présente l'avantage que les sommes, et donc le seuil S1$_k$ sont sans dimension. Cependant, la division par le signal SU$_{j,k}$ est facultative.

Selon une variante de la première réalisation, l'étape E5 comprend le calcul de la différence :

$$D_{j,k} = 1 + \frac{I_k}{SU_{j,k}} - S1_k = \sum_{i=1}^{J} x_{i,k} \cdot \frac{P_{i,k}}{SU_{j,k}} - S1_k$$

La différence D$_{j,k}$ est à minimiser.

Une fonction f(D$_{j,k}$) est sélectionnée par exemple égale à :

$$f(D_{j,k}) = e^{a.D_{j,k}}$$

avec a un nombre réel strictement positif.

Pour optimiser le plan d'allocation des fréquences dans le réseau, la fonction à minimiser est :

$$\sum_{i=1}^{J} \sum_{n=1}^{K} x_{i,n} \cdot e^{a.D_{i,n}}$$

Selon une **seconde réalisation**, les interférences prises en compte ne sont pas uniquement les interférences dues aux signaux émis à la fréquence F$_k$, dites interférences co-canal. Les interférences dues aux signaux émis à toutes les fréquences F$_1$ à F$_K$ du spectre sont également considérées et sont sommées en une somme I1$_k$.

Pour cette seconde réalisation, la relation (1) devient :

$$SU_{j,k} + I1_k = \sum_{n=1}^{K} \sum_{i=1}^{J} x_{i,n} \cdot R_{k,n} \cdot P_{i,n}$$

Dans cette relation, R$_{k,n}$ est un rapport d'interférence entre les fréquences F$_k$ et F$_n$. Le rapport R$_{k,n}$ dépend de la différence des fréquences F$_k$ et F$_n$. A titre de premier exemple,

$R_{k,n} = 1$      si n = k,

$R_{k,n} = 0{,}01$      si n = k-1 ou n = k+1 et

$R_{k,n} = 0$      si n ≠ k, n ≠ k - 1 et n ≠ k + 1.

Selon un second exemple, pour le réseau GSM,

$R_{k,n} = 1$      si n = k,

$R_{k,n} = 10^{-1,8}$      si n = k-1 ou n = k+1,

$R_{k,n} = 10^{-5}$      si n = k-2 ou n = k+2,

$R_{k,n} = 10^{-20}$      si n = k-3 ou n = k+3, et

$R_{k,n} = 0$      dans tous les autres cas.

Comme précédemment en divisant par le signal utile SU$_{j,k}$, la relation ci-dessus s'écrit :

$$1 + \frac{\text{I1}_k}{\text{SU}_{j,k}} = \sum_{n=1}^{K} \sum_{i=1}^{J} x_{i,n} \cdot \frac{R_{k,n} \cdot P_{i,n}}{\text{SU}_{j,k}}.$$

Au point M le rapport de la somme des interférences dues aux signaux émis à toutes les fréquences du spectre alloué au réseau RES et du signal utile de fréquence $F_k$ s'exprime sous la forme d'une fonction linéaire des variables $x_{i,k}$, avec $1 \leq i \leq J$ et $1 \leq k \leq K$.

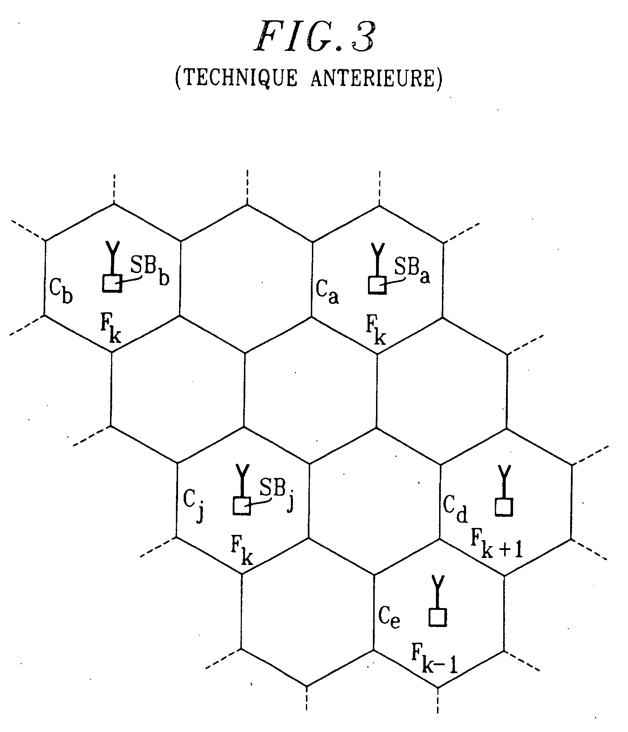

A titre d'exemple en référence à la figure 3, la fréquence $F_k$ est allouée aux cellules $C_a$, $C_b$ et $C_j$, la fréquence $F_{k-1}$ est allouée à la cellule $C_e$ et la fréquence $F_{k+1}$ est allouée à la cellule $C_d$.

La relation suivante est alors vérifiée pour le premier exemple :

$$\text{SU}_{j,j} + \text{I1}_k = P_{a,k} + P_{b,k} + P_{j,k} + 0{,}01.P_{e,k-1} + 0.01.P_{d,k+1}.$$

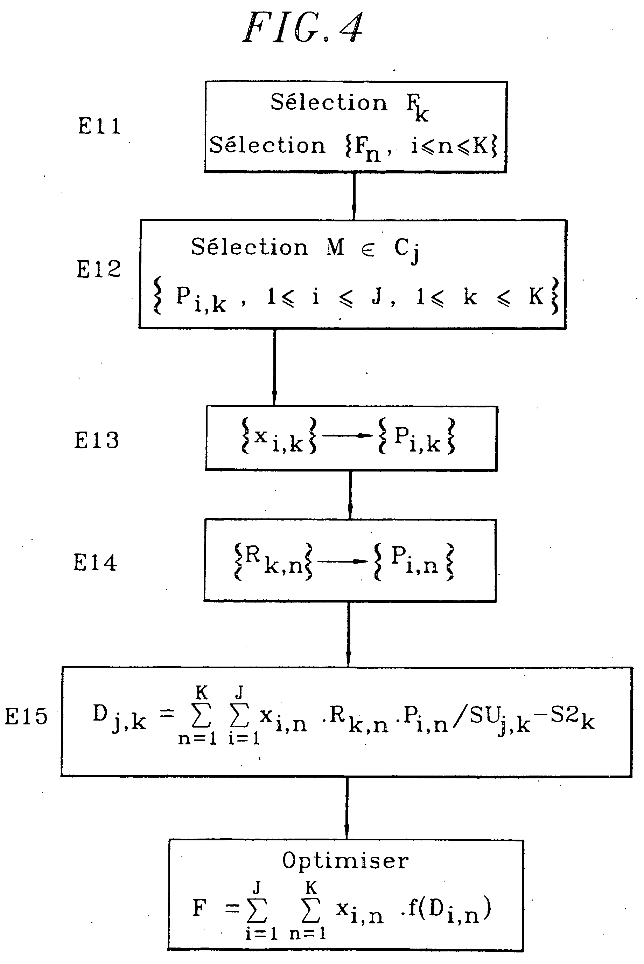

En référence à la figure 4, un algorithme de modélisation des interférences selon la **seconde réalisation** de l'invention comprend cinq étapes E11 à E15.

L'étape E11 comprend la sélection d'une première fréquence $F_k$ dans le spectre et d'un ensemble de secondes fréquences $\{F_n\}$. Par exemple, l'ensemble de secondes fréquences comprend toutes les fréquences allouées au réseau radiotéléphonique RES.

L'étape E12 est la sélection d'un point M dans la cellule $C_j$ pour lequel le modèle de propagation fournit les signaux $P_{1,1}$ à $P_{J,K}$ émis à la première fréquence sélectionnée $F_k$ et aux secondes fréquences sélectionnées depuis toutes les stations de base du réseau radiotéléphonique.

L'étape E13 affecte les coefficients $x_{1,1}$ à $x_{J,K}$ aux signaux fournis par le modèle de propagation, respectivement. Comme précédemment, la variable $x_{j,k}$ vaut 0 ou 1.

A l'étape E14, des rapports d'interférence $R_{k,1}$ à $R_{k,K}$ sont affectés aux signaux fournis par le modèle de propagation respectivement. Un rapport d'interférence $R_{k,n}$ dépend de la différence entre la première fréquence $F_k$ et l'une $F_n$ des secondes fréquences. Le rapport d'interférence $R_{k,n}$ est affecté au signal $P_{i,n}$ pour $1 \leq i \leq J$.

L'étape E15 est la multiplication des signaux $P_{1,1}$ à $P_{J,K}$ fournis par le modèle de propagation par les coefficients respectifs $x_{1,1}$ à $x_{J,K}$ et par les rapports d'interférence respectifs $R_{k,1}$ à $R_{k,K}$, suivie de l'addition de tous les produits obtenus. Un seuil prédéterminé $S2_k$ est soustrait à la somme ainsi obtenue pour déterminer si les coefficients $x_{1,1}$ à $x_{J,K}$ affectés à l'étape E13 garantissent des interférences inférieures au seuil $S2_k$.

En variante, l'étape E15 comprend en outre la division de la somme obtenue par le signal utile $SU_{j,k}$ dans la cellule $C_j$, comme à l'étape E5 précédemment décrite.

Selon une variante de seconde réalisation, l'étape E15 comprend le calcul de la différence :

$$D_{j,k} = \left( \left(1 + \frac{I_{1k}}{SU_{j,k}}\right) - S2_k \right).$$

Une fonction $f(D_{j,k})$ est sélectionnée, telle que :

$f(D_{j,k})$ est proche de zéro pour $D_{j,k} \leq 0$, et
$f(D_{j,k})$ croît rapidement quand $D_{j,k} \geq 0$

Par exemple, la fonction sélectionnée est :

$$f(D_{j,k}) = e^{aD_{j,k}}$$

avec a un nombre réel strictement positif.

Pour optimiser le plan d'allocation des fréquences pour le réseau :

(i) la fonction suivante est minimisée :

$$\sum_{i=1}^{J} \sum_{n=1}^{K} \; \mathtt{x_{i,n} \cdot e^{a.Di,n}}$$

pour minimiser les interférences ;

(ii) la fonction suivante est maximisée :

$$\sum_{i=1}^{J} \sum_{n=1}^{K} \; \mathtt{x_{i,n} \; (1 \; - \; e^{a.Di,n})}$$

pour maximiser le trafic.

Selon une **troisième réalisation,** la somme des signaux reçus est moyennée sur un ensemble de points $M_{j,1}$ à $M_{j,S}$ avec S entier positif, situés dans la cellule $C_j$.

En un point $M_{j,s}$, avec s un entier compris entre 1 et S, le signal utile émis à la fréquence $F_k$ par la station de base $SB_j$ est noté $SU_{j,k,s}$. La somme des signaux d'interférence au point $M_{j,s}$, émis à la fréquence $F_k$ par les stations de base autres que la station $SB_j$ est notée $I_{k,s}$. Le modèle de propagation au point $M_{j,s}$ fournit des signaux $P_{1,1,s}$ à $P_{J,K,s}$ reçus au point $M_{j,s}$ et émis aux fréquences $F_1$ à $F_K$ depuis les stations de base des cellules $C_1$ à $C_J$.

La somme des interférences dues aux signaux émis à la fréquence $F_k$ et du signal utile de fréquence $F_k$, moyennée sur les points $M_{j,1}$ à $M_{j,S}$ dans la cellule $C_j$ est :

$$\left(1 + \frac{I}{SU}\right)_{moy} = \frac{1}{S} \cdot \sum_{i=1}^{J} \; x_{i,k} \cdot \sum_{s=1}^{S} \; \frac{P_{i,k,s}}{SU_{j,k,s}}$$

Sur les points $M_{j,1}$ à $M_{j,S}$ de la cellule $C_j$, la moyenne du rapport de la somme des interférences dues aux signaux émis à la fréquence $F_k$ et du signal utile de fréquence $F_k$ s'exprime sous la forme d'une fonction linéaire des variables $x_{i,k}$ avec $1 \le i \le J$.

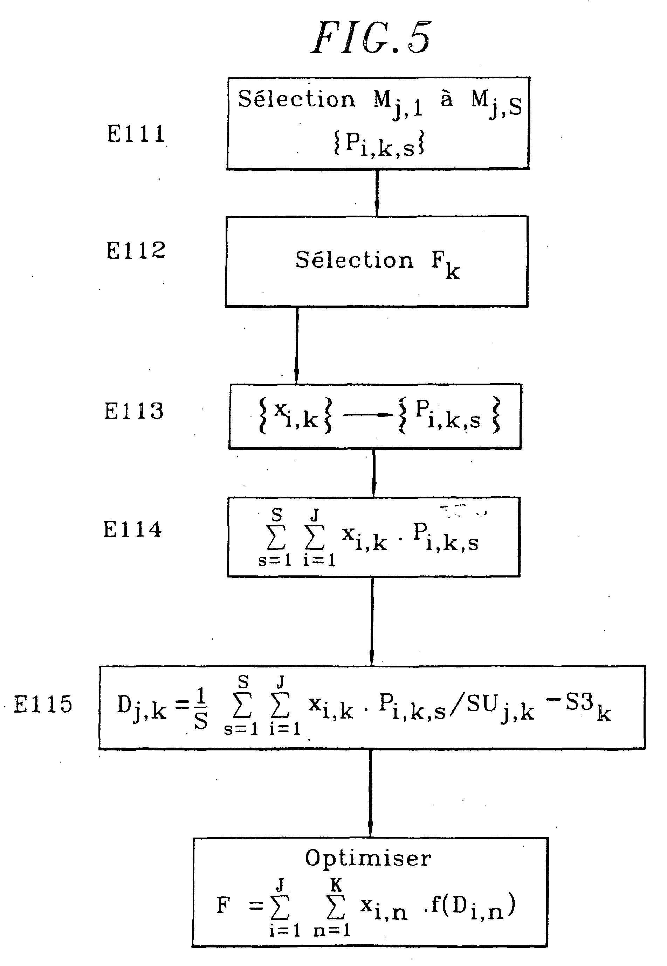

En référence à la figure 5, un algorithme de modélisation des interférences selon la **troisième réalisation** comprend cinq étapes E111 à E115.

L'étape E111 est la sélection des points $M_{j,1}$ à $M_{j,S}$ par exemple répartis dans la cellule $c_j$, pour lesquels le modèle de propagation fournit les signaux reçus $\{P_{i,k,s}, 1 \le i \le J, 1 \le k \le K$ et $1 \le s \le S\}$ qui sont émis depuis toutes les cellules et à toutes les fréquences.

L'étape E112 est analogue à l'étape E1 (figure 2) précédemment décrite. La fréquence $F_k$ est sélectionnée.

A l'étape E113, des coefficients $\{x_{i,k}, 1 \le i \le J\}$ sont affectés aux signaux $\{P_{i,k,s}, 1 \le i \le J$ et $1 \le s \le S\}$. Pour une cellule donnée $C_i$ un même coefficient $x_{i,k}$ valant "0" ou "1" est ainsi affecté à S signaux $P_{i,k,s}$. En variante, un coefficient est affecté pour chaque signal $P_{i,k,s}$.

L'étape E114 est le calcul de la somme :

$$\sum_{s=1}^{S} \sum_{i=1}^{J} \; x_{i,k} \cdot \frac{P_{i,k,s}}{SU_{j,k,s}}$$

L'étape E115 est un calcul de la moyenne arithmétique de la somme précédente, à laquelle est soustrait un seuil prédéterminé $S3_k$. Ceci permet de vérifier si l'affectation des coefficients $\{x_{i,k}\}$ à l'étape E113 limite les interférences à une valeur inférieure au seuil $S3_k$.

La différence $D_{j,k}$ obtenue contribue à établir le critère d'optimisation comme dans les première et seconde réalisations.

Dans la troisième réalisation précédente, la moyenne calculée est une moyenne arithmétique. En variante, la moyenne calculée est une moyenne de coefficient p, où p est un nombre réel positif :

$$\left(1+\frac{I}{SU}\right)^{p}_{moy} = \sum_{i=1}^{J} x_{i,k} \cdot \left[\frac{1}{S} \cdot \sum_{s=1}^{S} \left(\frac{P_{i,k,s}}{SU_{j,k,s}}\right)^{p}\right]^{1/p}$$

En particulier, si p = 2,

$$\left(1+\frac{I}{SU}\right)^{2}_{moy}$$

est une moyenne quadratique , et si p = +∞,

$$\left(1+\frac{I}{SU}\right)^{+\infty}_{moy}$$

est égale à la valeur maximale d'interférence sur les points $M_1$ à $M_S$ de la cellule $C_j$ :

$$\max_{1 \leq s \leq S} \left( \sum_{i=1}^{J} x_{i,k} \cdot \frac{P_{i,k,s}}{SU_{j,k,s}} \right).$$

En variante, les interférences prises en compte ne sont pas uniquement les interférences dues aux signaux de fréquence $F_k$. Les interférences dues à toutes les fréquences $F_1$ à $F_k$ du spectre alloué au réseau radiotéléphonique RES sont également considérées.

La moyenne du rapport de la somme des interférences dues aux fréquences $F_1$ à $F_k$ et du signal utile à la fréquence $F_k$ est :

$$\left(1+\frac{I}{SU}\right)_{moy} = \frac{1}{S} \sum_{n=1}^{K} \sum_{i=1}^{J} \sum_{s=1}^{S} x_{i,n} \cdot \frac{R_{k,n} \cdot P_{i,n,s}}{SU_{j,k,s}}.$$

Selon d'autres réalisations, l'interférence est moyennée sur un ensemble de points qui sont répartis sur plusieurs cellules adjacentes de manière à obtenir une interférence moyenne sur ces cellules adjacentes, ou l'interférence est moyennée sur toutes les cellules du réseau.

En pratique, le problème de l'allocation de fréquence est dirigé vers un objectif à réaliser dépendant d'une fonction de "coût" qui regroupe des contraintes d'interférences et des besoins en trafic dans les cellules à respecter. La solution du problème est le plan d'allocation exprimé sous la forme de l'ensemble $\{x_{j,k}, 1 \leq j \leq J, 1 \leq k \leq K\}$.

L'objectif est choisi à titre d'exemple parmi:

- maximiser un trafic total effectif TTE dans le réseau radiotéléphonique cellulaire,
- minimiser les interférences,
- minimiser un nombre NFU de fréquences utilisées dans le réseau, ou

- maximiser une efficacité spectrale ES.

Par exemple, le trafic total effectif TTE est :

$$TTE = \sum_{j=1}^{J} \sum_{k=1}^{K} r_{j,k} \cdot x_{j,k}$$

où $r_{j,k}$ est une fonction d'une différence $D_{j,k}$ entre l'interférence à la fréquence $F_k$ pour la cellule $C_j$ et un seuil prédéterminé.

La fonction $r_{j,k}$ varie en fonction de $D_{j,k}$ entre 0 et 1, tend vers 1 lorsque la variable $D_{j,k}$ tend vers $-\infty$, c'est-à-dire lorsque l'interférence à la fréquence $F_k$ pour la cellule $C_j$ est très faible et vers 0 lorsque la variable $D_{j,k}$ tend vers $+\infty$, c'est-à-dire lorsque l'interférence à la fréquence $F_k$ pour la cellule $C_j$ est très élevée.

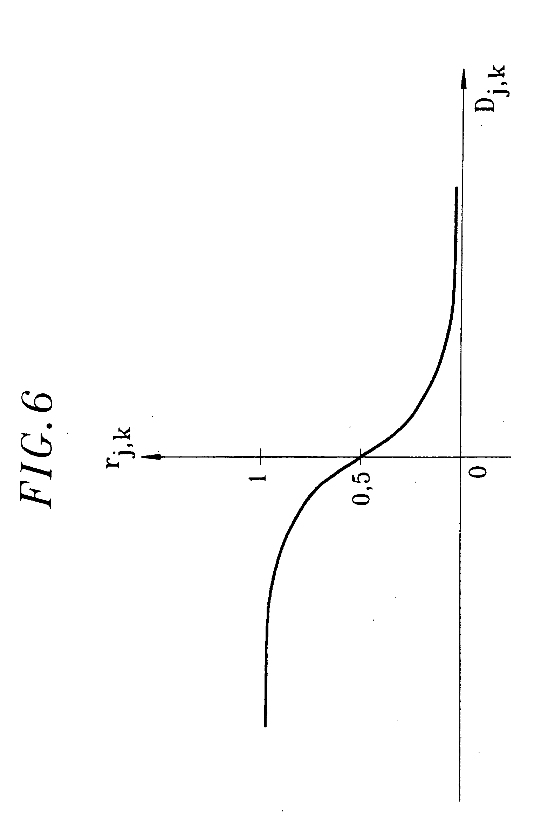

A titre d'exemple, la fonction $r_{j,k}$ représentée à la figure 6 est :

$$r_{j,k}\left(D_{j,k}\right) = \frac{1}{2}\left[1 - th\left(D_{j,k}\right)\right]$$

où th dénote la tangente hyperbolique.

La minimisation des interférences est par exemple réalisée sur une interférence moyenne calculée pour toutes les cellules $C_j$ et pour toutes les fréquences $F_k$ telles que le coefficient associé $x_{j,k}$ soit égal à 1.

L'efficacité spectrale ES est :

$$ES = \frac{TTE}{NFU}$$

Les contraintes à respecter sont :

- minimiser les interférences, par exemple le niveau moyen de puissance reçu par cellule, pour toutes les cellules $C_1$ à $C_J$ du réseau et toutes les fréquences $F_1$ à $F_K$ du spectre ;
- affecter suffisamment de fréquences par cellule pour écouler tout le trafic :

$$\sum_{k=1}^{K} x_{j,k} \geq NFC_j, \quad 1 \leq j \leq J$$

où $NFC_j$ est un entier égal au nombre minimum de fréquences à allouer à la cellule $C_j$ ;
- choisir les variables $x_{j,k}$, telles que :
$x_{j,k} \in \{0,1\}$ pour $1 \leq j \leq J$ et $1 \leq k \leq K$.

**Revendications**

1. Procédé de modélisation des interférences dans un réseau radiotéléphonique cellulaire (RES) comprenant des cellules ($C_j$) desservies par des stations de base respectives ($SB_i$), procédé selon lequel un spectre de fréquences comprenant un nombre fini de fréquences ($F_k$) est alloué au réseau, et un modèle de propagation indique des signaux radioélectriques ($P_{i,k}$) respectivement émis à chaque fréquence du spectre depuis les stations de base ($SB_i$) du réseau et reçus en un point (M) du réseau, **caractérisé en ce qu'**il comprend :

   - sélectionner (E1) une première fréquence ($F_k$) dans le spectre alloué au réseau radiotéléphonique cellulaire,
   - sélectionner (E2) un point (M) du réseau pour lequel le modèle de propagation ($P_{i,k}$) est déterminé,

- affecter (E3) des coefficients ($x_{i,k}$) respectivement aux signaux radioélectriques ($P_{i,k}$) à la première fréquence sélectionnée ($F_k$) reçus au point sélectionné (M), l'un desdits coefficients ($x_{i,k}$) étant égal à 1 si la première fréquence sélectionnée ($F_k$) est allouée à une station de base ($SB_j$) émettant l'un respectif des signaux radioélectriques ($P_{i,k}$), et égal à 0 sinon,
- multiplier (E4) les signaux radioélectriques ($P_{i,k}$) à la première fréquence sélectionnée reçus au point sélectionné par les coefficients respectifs ($x_{i,k}$) en des produits et sommer (E4) les produits obtenus en un premier modèle d'interférence, et
- comparer (E5) le premier modèle d'interférence à un premier seuil ($S1_k$) prédéterminé pour la première fréquence afin de ne maintenir les coefficients affectés que si le premier modèle d'interférence est inférieur au premier seuil.

2. Procédé conforme à la revendication 1, **caractérisé en ce qu'**il comprend en outre diviser (E5) le premier modèle d'interférence par le signal émis à la première fréquence sélectionnée ($F_k$) depuis la station de base ($SB_j$) desservant le point sélectionné (M) du réseau.

3. Procédé conforme à la revendication 1 ou 2, **caractérisé en ce qu'**il comprend

- sélectionner (E11) la première fréquence ($F_k$) et des secondes fréquences ($F_n$) dans le spectre alloué au réseau radiotéléphonique cellulaire (RES),
- effectuer les étapes de sélectionner (E12) un point (M), affecter (E13) des coefficients ($x_{j,k}$), multiplier et sommer pour lesdites première fréquence et secondes fréquences sélectionnées, afin d'obtenir des premiers modèles d'interférence respectifs,
- affecter (E14) des rapports d'interférence respectifs ($R_{j,k}$) aux premiers modèles d'interférence, le rapport d'interférence relatif à un premier modèle d'interférence étant fonction de la différence entre la première fréquence et la seconde fréquence respective ($F_n$), excepté le rapport d'interférence ($R_{k,k}$) relatif à la première fréquence qui est égal à 1,
- multiplier (E15) les premiers modèles d'interférence par les rapports d'interférence respectifs en des produits et sommer (E15) les produits obtenus en un second modèle d'interférence, et
- comparer le second modèle d'interférence à un deuxième seuil ($S2_k$) prédéterminé pour la première fréquence afin de ne maintenir les coefficients et rapports affectés que si le second modèle d'interférence est inférieur au deuxième seuil.

4. Procédé conforme à la revendication 1 ou 2, **caractérisé en ce qu'**il comprend

- sélectionner (E111) plusieurs points ($M_{j,s}$) du réseau situés dans une même cellule ($C_j$), pour lesquels le modèle de propagation est déterminé respectivement,
- effectuer les étapes de sélectionner (E112) une première fréquence ($F_k$), affecter (E113) des coefficients, multiplier et sommer (E114) pour chacun desdits plusieurs points sélectionnés, afin d'obtenir des premiers modèles d'interférence respectifs,
- moyenner (E115) lesdits premiers modèles d'interférence respectifs en un troisième modèle d'interférence, et
- comparer (E115) le troisième modèle d'interférence à un troisième seuil ($S3_k$) prédéterminé pour la première fréquence afin de ne maintenir les coefficients affectés que si le troisième modèle d'interférence est inférieur au troisième seuil.

5. Procédé conforme à la revendication 4, **caractérisé en ce que** l'étape de moyenner (E115) comprend calculer une moyenne arithmétique ou quadratique ou de coefficient réel positif (p) desdits premiers modèles d'interférence sur lesdits plusieurs points sélectionnés ($M_{j,s}$).

## Patentansprüche

1. Verfahren zur Modellierung der Interferenzen in einem zellularen Funktelephonnetz (RES), bestehend aus Zellen ($C_j$), die von jeweiligen Funkfeststationen ($SB_j$) versorgt werden, Verfahren, nach dem ein Frequenzspektrum, das eine endliche Anzahl an Frequenzen ($F_k$) umfasst, dem Netz zugeteilt wird und ein Ausbreitungsmodell Funksignale ($P_{i,k}$) angibt, die jeweils auf jeder Frequenz des Spektrums von den Funkfeststationen ($SB_j$) des Netzes gesendet und in einem Punkt (M) des Netzes empfangen werden, **dadurch gekennzeichnet, dass** es darin besteht:

- eine erste Frequenz ($F_k$) aus dem dem zellularen Funktelephonnetz zugeteilten Frequenzspektrum auszuwählen (E1),
- einen Punkt (M) des Netzes auszuwählen (E2), für den das Ausbreitungsmodell ($P_{i,k}$) bestimmt ist,
- den Funksignalen ($P_{i,k}$) auf der ersten ausgewählten Frequenz ($F_k$), die im ausgewählten Punkt (M) empfangen werden, jeweils Koeffizienten ($x_{i,k}$) zuzuordnen (E3), wobei einer der genannten Koeffizienten ($x_{i,k}$) gleich 1 ist, wenn die erste ausgewählte Frequenz ($F_k$) einer Funkfeststation ($SB_j$) zugeteilt worden ist, die ein entsprechendes der Funksignale ($P_{i,k}$) aussendet, und anderenfalls gleich 0 ist,
- die Funksignale ($P_{i,k}$) auf der ersten ausgewählten Frequenz, die im ausgewählten Punkt empfangen werden, mit den entsprechenden Koeffizienten ($x_{i,k}$) zu Produkten zu multiplizieren (E4) und die erhaltenen Produkte zu einem ersten Interferenzmodell zu summieren (E4), und
- das erste Interferenzmodell mit einem ersten vorher für die erste Frequenz festgelegten Schwellenwert ($S1_k$) zu vergleichen (E5), um die zugeordneten Koeffizienten nur zu behalten, wenn das erste Interferenzmodell unter dem ersten Schwellenwert liegt.

2. Verfahren nach Patentanspruch 1, **dadurch gekennzeichnet, dass** es außerdem darin besteht, das erste Interferenzmodell durch das Signal zu dividieren (E5), das auf der ersten ausgewählten Frequenz ($F_k$) von der Funkfeststation ($SB_j$) gesendet wird, die den ausgewählten Punkt (M) des Netzes versorgt.

3. Verfahren nach Patentanspruch 1 oder 2, **dadurch gekennzeichnet, dass** es darin besteht

- die erste Frequenz ($F_k$) und zweite Frequenzen ($F_n$) aus dem dem zellularen Funktelephonnetz (RES) zugeteilten Spektrum auszuwählen (E11),
- die Schritte der Auswahl (E12) eines Punktes (M), der Zuordnung (E13) von Koeffizienten ($x_{j,k}$), Multiplikation und Summierung für die ausgewählte erste und die ausgewählten zweiten Frequenzen auszuführen, um entsprechende erste Interferenzmodelle zu erhalten,
- den ersten Interferenzmodellen entsprechende Interferenzverhältnisse ($R_{j,k}$) zuzuordnen (E14), wobei das Interferenzverhältnis bezüglich eines ersten Interferenzmodells eine Funktion der Differenz zwischen der ersten Frequenz und der entsprechenden zweiten Frequenz (Fn) ist, abgesehen vom Interferenzverhältnis ($R_{k,k}$) bezüglich der ersten Frequenz, der gleich 1 ist,
- die ersten Interferenzmodelle mit den entsprechenden Interferenzverhältnissen zu Produkten zu multiplizieren (E15) und die erhaltenen Produkte zu einem zweiten Interferenzmodell zu summieren (E15), und
- das zweite Interferenzmodell mit einem zweiten für die erste Frequenz vorher festgelegten Schwellenwert ($S2_k$) zu vergleichen, um die Koeffizienten und zugeordneten Verhältnisse nur zu behalten, wenn das zweite Interferenzmodell unter dem zweiten Schwellenwert liegt.

4. Verfahren nach Patentanspruch 1 oder 2, **dadurch gekennzeichnet, dass** es darin besteht

- mehrere Punkte ($M_{j,s}$) des Netzes, die sich in derselben Zelle ($C_j$) befinden, auszuwählen (E111), für die jeweils das Ausbreitungsmodell bestimmt ist,
- die Schritte der Auswahl (E112) einer ersten Frequenz ($F_k$), der Zuordnung (E113) der Koeffizienten, Multiplikation und Summierung (E114) für jeden der genannten mehreren ausgewählten Punkte auszuführen, um entsprechende erste Interferenzmodelle zu erhalten,
- die genannten jeweiligen ersten Interferenzmodelle zu einem dritten Interferenzmodell zu mitteln (E115), und
- das dritte Interferenzmodell mit einem dritten für die erste Frequenz vorher festgelegten Schwellenwert ($S3_k$) zu vergleichen (E115), um die zugeordneten Koeffizienten nur zu behalten, wenn das dritte Interferenzmodell unter dem dritten Schwellenwert liegt.

5. Verfahren nach Patentanspruch 4, **dadurch gekennzeichnet, dass** der Schritt der Mittelwertbildung (E115) die Berechnung eines arithmetischen oder quadratischen Mittels oder reellen positiven Koeffizienten (p) der genannten ersten Interferenzmodelle an den genannten mehreren ausgewählten Punkten ($M_{j,s}$) umfasst.

**Claims**

1. A method of modeling interference in a cellular radiotelephone network (RES) comprising cells ($C_j$) served by respective base stations ($SB_j$), wherein a frequency spectrum comprising a finite number of frequencies ($F_k$) is allocated to the network, and a propagation model indicates radio signals ($P_{i,k}$) respectively emitted at each frequency of the spectrum from the base stations ($SB_j$) of the network and received at a point (M) of the network, **characterized in that** it comprises:

- selecting (E1) a first frequency ($F_k$) in the spectrum allocated to the cellular radiotelephone network,
- selecting (E2) in the network a point (M) for which the propagation model ($P_{i,k}$) is determined,
- assigning (E3) coefficients ($x_{i,k}$) respectively to the radio signals ($P_{i,k}$) at the first selected frequency ($F_k$) received at the selected point (M), one of said coefficients ($x_{i,k}$) being equal to 1 if the first selected frequency ($F_k$) is allocated to a base station ($SB_j$) emitting a respective one of the radio signals ($P_{i,k}$), and equal to 0 otherwise,
- multiplying (E4) the radio signals ($P_{i,k}$) at the first selected frequency received at the selected point by the respective coefficients ($x_{i,k}$) into products and summing (E4) the obtained products into an interference model, and
- comparing (E5) the first interference model to a first predetermined threshold ($S1_k$) for the first frequency thereby keeping the assigned coefficients only if the first interference model is less than the first threshold.

2. A method according to claim 1, **characterized in that** it further comprises dividing (E5) the first interference model by the signal emitted at the first selected frequency ($F_k$) from the base station ($SB_j$) serving the selected point (M) of the network.

3. A method according to the claim 1 or 2, **characterized in that** it comprises

- selecting (E11) the first frequency ($F_k$) and second frequencies ($F_n$) in the spectrum allocated to the cellular radiotelephone network (RES),
- executing the steps of selecting (E12) a point (M), assigning (E13) coefficients ($x_{j,k}$), multiplying and summing for said selected first frequency and second frequencies thereby obtaining first respective interference models,
- assigning (E14) interference ratios ($R_{j,k}$) respectively to the first interference models, the interference ratio relative to a first interference model being a function of the difference between the first frequency and the respective second frequency ($F_n$), except for the interference ratio ($R_{k,k}$) relative to the first frequency which is equal to 1,
- multiplying (E15) the first interference models by the respective interference ratios into products, and summing (E15) the obtained products into a second interference model, and
- comparing the second interference model to a second predetermined threshold ($S2_k$) for the first frequency thereby keeping the coefficients and the assigned ratios only if the second interference model is less than the second threshold.

4. A method according to the claim 1 or 2, **characterized in that** it comprises

- selecting (E111) plural points ($M_{j,s}$) in the network situated in a same cell ($C_k$), for which the propagation model is respectively determined,
- executing the steps of selecting (E112) a first frequency ($F_k$), assigning (E113) coefficients, multiplying and summing (E114) for each of said plural selected points, thereby obtaining first respective interference models,
- averaging (E115) said first interference models respectively into a third interference model, and
- comparing (E115) the third interference model to a third predetermined threshold ($S3_k$) for the first frequency thereby keeping the assigned coefficients only if the third interference model is less than the third threshold.

5. The method according to claim 4, **characterized in that** the averaging step (E115) includes calculation of an arithmetic or quadratic mean or a mean of positive real coefficient (p) of said first interference models derived for said plural selected points ($M_{j,s}$).

# FIG.1

## (TECHNIQUE ANTERIEURE)

## *FIG.2*

E1 — Sélection $F_k$

E2 — Sélection $M \in C_j$
$$\{ P_{i,k} , 1 \leqslant i \leqslant J \}$$

E3 — $\{ x_{i,k} \} \longrightarrow \{ P_{i,k} \}$

E4 — $\sum_{i=1}^{J} x_{i,k} \cdot P_{i,k}$

E5 — $D_{j,k} = \sum_{i=1}^{J} x_{i,k} \cdot P_{i,k} / SU_{j,k} - S1_k$

Optimiser
$$F = \sum_{i=1}^{J} \sum_{n=1}^{K} x_{i,n} \cdot f(D_{i,n})$$

# *FIG.3*

## (TECHNIQUE ANTERIEURE)

## $FIG.4$

E11 — Sélection $F_k$ / Sélection $\{F_n,\ i\leqslant n\leqslant K\}$

E12 — Sélection $M \in C_j$ / $\left\{P_{i,k},\ 1\leqslant i \leqslant J,\ 1\leqslant k \leqslant K\right\}$

E13 — $\{x_{i,k}\} \longrightarrow \{P_{i,k}\}$

E14 — $\{R_{k,n}\} \longrightarrow \{P_{i,n}\}$

E15 — $D_{j,k} = \sum_{n=1}^{K} \sum_{i=1}^{J} x_{i,n} . R_{k,n} . P_{i,n} / SU_{j,k} - S2_k$

Optimiser

$$F = \sum_{i=1}^{J} \sum_{n=1}^{K} x_{i,n} . f(D_{i,n})$$

# FIG.5

E111
$$\text{Sélection } M_{j,1} \text{ à } M_{j,S}$$
$$\{P_{i,k,s}\}$$

E112
$$\text{Sélection } F_k$$

E113
$$\{x_{i,k}\} \longrightarrow \{P_{i,k,s}\}$$

E114
$$\sum_{s=1}^{S} \sum_{i=1}^{J} x_{i,k} \cdot P_{i,k,s}$$

E115
$$D_{j,k} = \frac{1}{S} \sum_{s=1}^{S} \sum_{i=1}^{J} x_{i,k} \cdot P_{i,k,s} / SU_{j,k} - S3_k$$

Optimiser
$$F = \sum_{i=1}^{J} \sum_{n=1}^{K} x_{i,n} \cdot f(D_{i,n})$$

## FIG.6